# EUROPEAN PATENT APPLICATION

(11) **EP 0 896 230 A2**
(43) Date of publication of application: **10.02.1999**
(21) Application number: 98114305.0
(22) Date of filing: 30.07.1998
(51) Int. Cl.: G02B 5/124, G02B 5/128

(54) **Retroreflector and manufacturing process therefor**

(30) Priority: 04.08.1997 JP 209403/97
(71) Applicant: Kubo, Akio, Kanagawa-ken (JP)
(72) Inventor: Kubo, Akio, Kanagawa-ken (JP)
(74) Representative: Walter, Helmut, Dipl.-Ing.

(57) **Abstract**

Retroreflector providing uniform brightness of reflected light. The retroreflector comprises a reflector (2) provided on a base material (1), the reflector (2) being arranged to have reflectance decreasing toward its center.

## Description

### BACKGROUND OF THE INVENTION

### Field of the Invention

The present invention relates to a recursive reflector used for a road-sign, notice plate, advertisement, or, more particularly, for a light wave range finder, which varies reflectance of a reflector.

### Description of the Prior Art

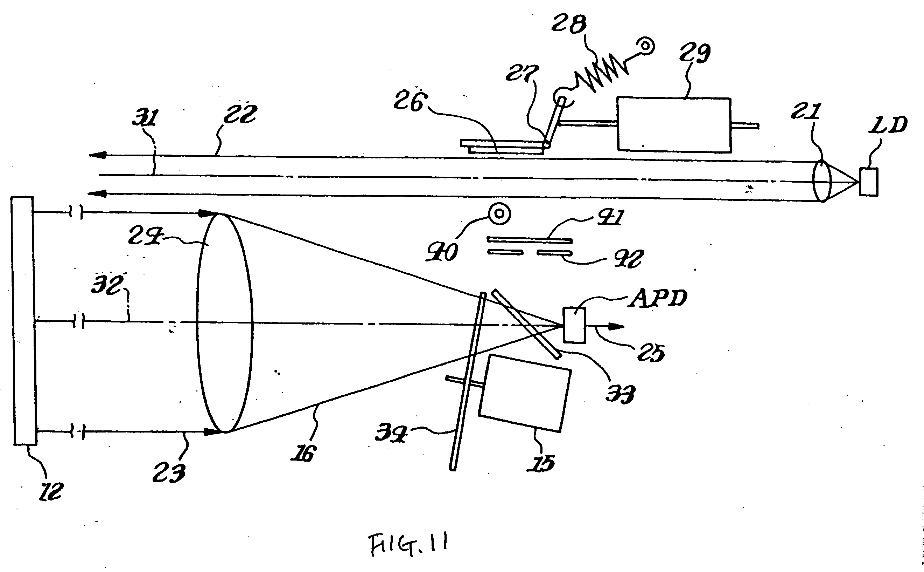

Generally, there is a recursive reflector, for example, as shown in FIGS. 9 and 10.

FIG. 9 shows a recursive reflector in which a large number of microprisms (hereinafter called "prisms") 10 are regularly arranged, and in which light is reflected two or three times on two or three surfaces of a prism 10, and reflected back toward the light source in a direction opposite to the incident direction. The microprisms 10 have an advantage that, since they have high form accuracy and are regularly arranged, the reflected light reaches longer distance and higher reflection brightness is provided. However, since it is difficult to be manufactured, they are very expensive as the recursive reflector.

There is also a recursive reflector of a type shown in FIG. 10(b) in which a larger number of small glass balls 11 are irregularly arranged on a base material. This causes light to be concentrated and reflected on and from the back side of small balls 11 as shown in FIG. 10(a), and then directed back through the small glass balls 11 toward the light source in a direction opposite to the incident direction. Such recursive reflector using the small glass balls 11 irregularly arranged has constant reflection performance over a wide angle and inexpensive.

However, since the recursive reflector in which the prisms 10 are arranged and the recursive reflector in which the small glass balls 11 are arranged have a characteristic that quantity of incident light is much at their center region, and gradually decreases toward the periphery, there is a problem that reflected light has much quantity per unit area at the center, but gradually decreases toward the periphery. Therefore, when they are used for a road-sign, notice plate, advertisement, safety sign, life-saving device or the like, the reflected light is too intense at a short distance, while visual confirmation may not be surely performed at a long distance, so that there may be a case where they cannot effectively serve as a recursive reflector.

In particular, there arises the following problem when the recursive reflector is used for a light wave range finder. The light wave range finder collimates a modulated laser beam into collimated light, directs it toward a recursive reflector (target), receives reflected light from it, and compares phases of the incident light and the reflected light to measure a distance from the phase difference between them. In this case, it is preferable in view of measurement accuracy that the incident light has the same level as the reflected light.

However, since there is a tendency that the level of reflected light decreases as the distance between the light wave range finder and the recursive reflector becomes large, the level difference becomes large, leading to trouble in measurement accuracy.

Specifically, while the laser beam is used in a form of collimated light, when it is projected toward a target at a long distance away, it spreads outward with a minute angle α,as shown in FIG. 12. For example, at a distance of about 200 m, the laser beam projected as a spot light spreads about 20 cm at the front end. (In the figure, the angle α is exaggerated than actual angle for ease of recognition.) While the light wave range finder 50 can typically measure distance from one meter to several hundred meters, there is difference in quantity of light of about 1/10000 between the reflected light from a target at about 1 m and that from a target at about 200 m. This is because light is incident at distance 11 on plane Sa which is a location where the laser beam does not yet fully spread, and provides higher reflectance of reflected light, while light is incident at distance 12 on plane Sb which is a location where the laser beam fully spreads, and from which a smaller quantity of reflected light is received. This calls for level adjustment for quantity of light, so that the level has been adjusted by a neutral density filter (ND filter) or the like. However, since the ND filter is prepared from a film photographic emulsion on which is developed, and has quantity difference in light of about 1/10000, it has problems that it is difficult to adjust density, its manufacturing yield is poor, and it is expensive.

### BRIEF SUMMARY OF THE INVENTION

### Object of the Invention

The present invention is to solve the above problems, and provides a recursive reflector which does not cause excessive reflection at a short distance, and allows sure visual confirmation at a long distance.

In addition, the present invention is to provide a recursive reflector which compensates level difference in quantity of light due to difference of distance so that the level difference is small.

Furthermore, the present invention is to provide a recursive reflector which can compensate the fact that the quantity level of reflected light is lowered because a beam spreads out.

### Summary of the Invention

While incident light has a characteristic that quantity of incident light is much at their center region, and gradually decreases toward the periphery, the recursive reflector of the present invention is constructed such that the reflectance stepwise or steplessly becomes smaller toward the center, so that quantity difference of reflected light can be eliminated between the center and the periphery. Thus, there can be provided a recursive reflector which can compensate level difference in quantity of reflected light due to difference of distance to a target so that it becomes small.

In addition, the recursive reflector according to a first aspect concentrically arranges a plurality of reflection belts with different reflectance in a stepwise or stepless manner, whereby the reflectance can be changed to accommodate intensity distribution of incident light. It is particularly effective for ring-shaped light (for example, gas laser). In addition, if the incident light has an oval-shape (for example, semiconductor laser), ovals may be concentrically arranged such that the reflectance becomes smaller toward the center. As described, since the shape may be changed for the shape of incident light, an appropriate shape may be employed for the type of laser being used, so that quantity difference of reflected light can be reduced between the center and the periphery.

The reflector may be a reflector made of a plurality of recursive transparent or translucent materials in the shape of ball or prism such as glass, plastic, or ceramic. In the case of ball, manufacturing is easy and inexpensive. In the case of prism, it becomes possible to provide higher reflectance and accuracy, so that reflection can be made over a further long distance. It is also possible to constitute the reflector by combining balls and prisms. This diversifies change of reflectance. In particular, when prisms are arranged in the peripheral area, the level difference in quantity of reflected light can be reduced at the peripheral area with low quantity of light.

Since the reflector can vary the reflectance by changing the exposed area of balls per unit area, the balls may be transparent or translucent balls with different reflectance or the same balls. Glass balls are particularly preferable because they do not deteriorate and have good stability. For example, since a transparent or translucent material in a form of ball or prism can vary the reflectance to be smaller toward the center by changing ratio of exposure from adhesive paint, even the same transparent or translucent material can provide various reflectance. In the case of balls, they may be mixed in the adhesive paint. In addition, the transparent material maybe mounted while its lower half is being embedded in the adhesive paint.

Furthermore, the reflectance can be varied by changing color of pigment for the adhesive Paint in which the balls are mixed, whereby the reflectance can be varied even for same reflector. It is particularly effective when the reflector is visually confirmed in a short distance.

A plurality of reflection bands (2) with different reflectance are concentrically arranged on a base material (1) such as resin including vinyl(ex.PVC), acrylic and polyester, metal or wood such that the reflectance decreases toward the center. In this case various reflectance of the reflection bands (2) may varied by arranging transparent or translucent material such as transparent or translucent uniform balls (3a, 3b, 3c, 3d) or prisms (3e, 3f, 3g, 3h) made of glass or plastics on the adhesive paint (5). Specifically, the reflectance may be varied by changing exposed area of the transparent or translucent material (3) per unit area.

The reflectance may be further enhanced by providing a reflecting layer on the back side of the reflector.

A sealed air layer consisting of a plurality of small spaces may be provided on the surface of the reflector, and a light transmitting protective layer may be provided on the surface of the air layer. Provision of the protective layer enables it to prevent contamination on the surface of transparent material. In addition, contamination can be easily removed only by wiping the protective layer.

The base material may be a bendable sheet. In that case, the recursive reflector may be mounted on a tubular or curved object, thereby widening its application.

The adhesive paint can be applied such that its density is coarse at the center and dense at the outer periphery by rotating the base material (1), causing the adhesive paint (8) mixed with the uniform transparent or translucent material (3) to flow down from a point above the center of rotation of the base material (1), and concentrically applying the paint with a centrifugal force due to the rotation. Such utilization of centrifugal force due to rotation allows it to easily manufacture a recursive reflector with variable density of balls.

### BRIEF DESCRIPTION OF THE DRAWINGS

FIG. 1 is a plan view showing a first embodiment of the present invention;
FIG. 2 is a plan view showing a second embodiment of the present invention;
FIG. 3 is a plan view showing a third embodiment of the present invention;
FIG. 4 is a plan view showing a fourth embodiment of the present invention;
FIG. 5 is a plan view showing a fifth embodiment of the present invention;
FIG. 6 is a plan view showing a sixth embodiment of the present invention;
FIG. 7 is a sectional view taken along line A-A of FIG. 1;
FIG. 8 is a perspective view for illustrating a process for manufacturing the recursive reflector of FIG. 1;
FIG. 9 is a plan view of a conventional recursive reflector using prisms;
FIG. 10 is a plan view of a conventional recursive reflector in which small glass balls are irregularly arranged;
FIG. 11 is a block diagram when the recursive reflector of the present invention is applied to a light wave range finder; and
FIG. 12 is a schematic diagram for illustrating how a laser beam is reflected by a recursive reflector when a distance is measured by a light wave range finder.

### DETAILED DESCRIPTION OF THE PREFERRED EMBODIMENTS

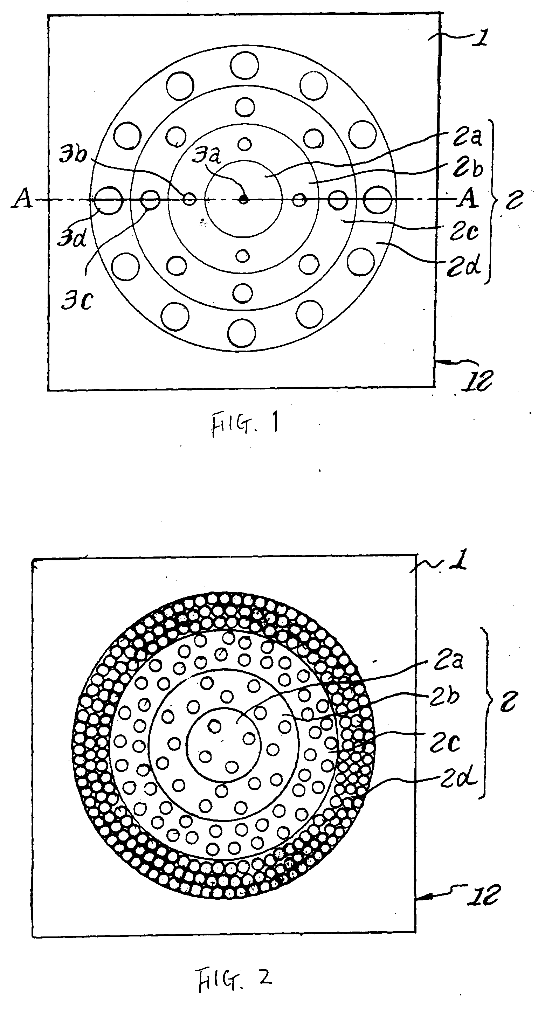

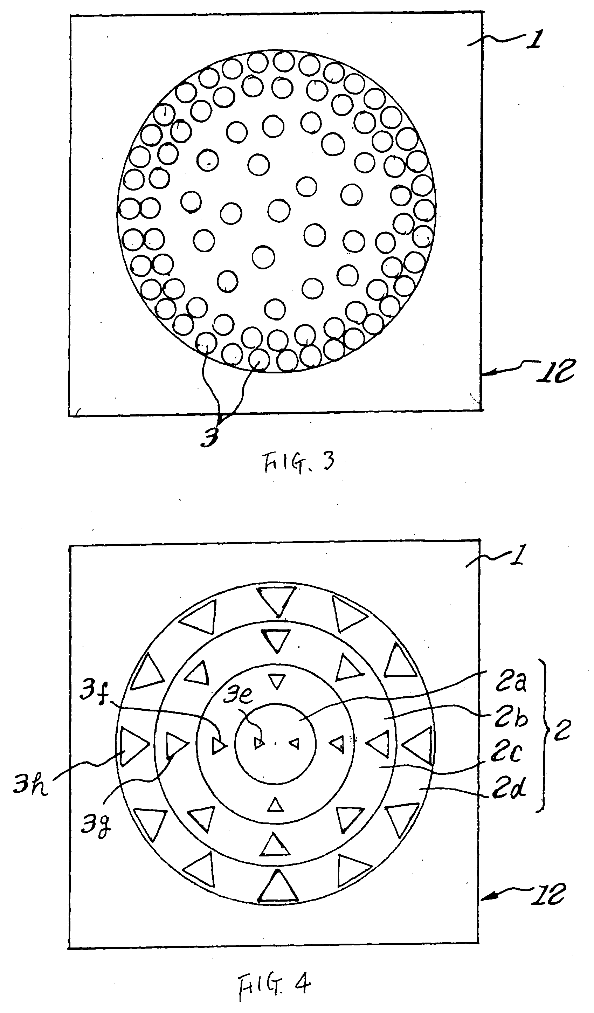

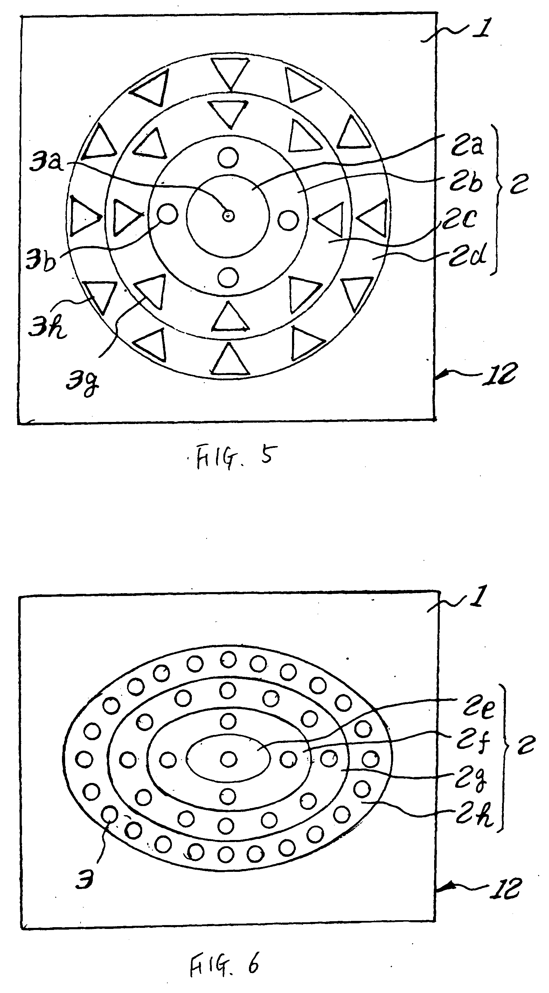

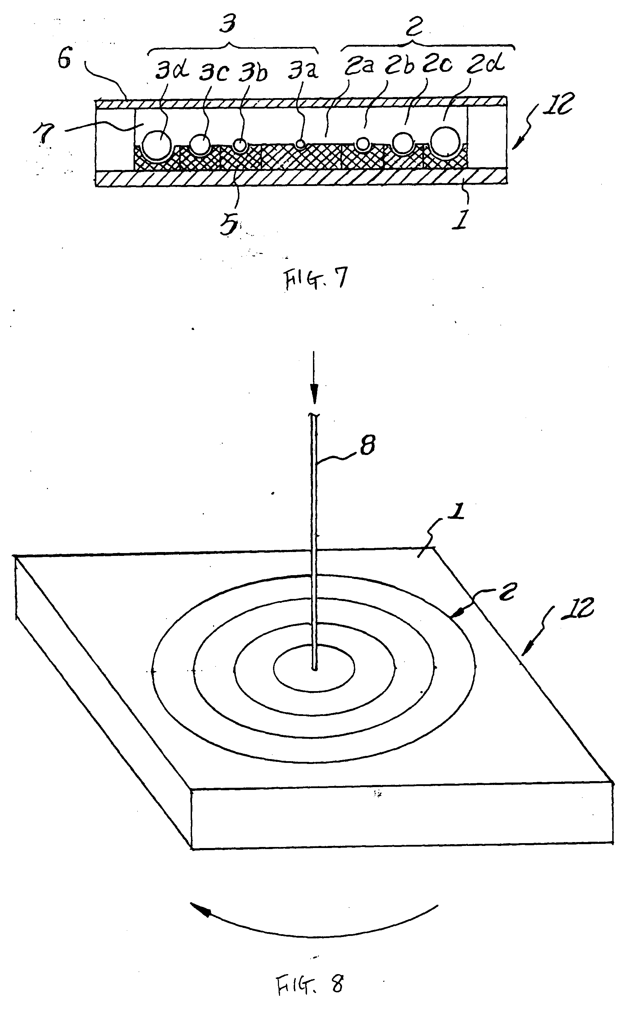

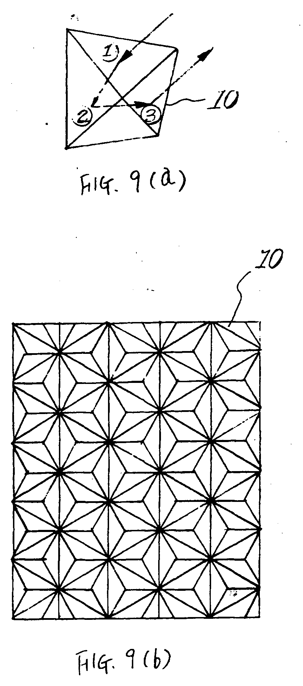

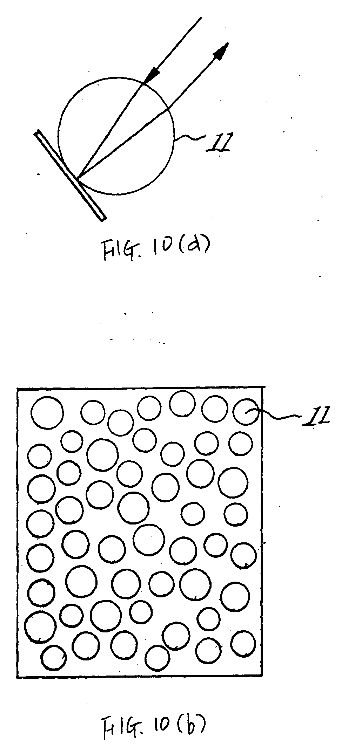

Now, embodiments of the present invention will be explained with reference to the drawings. FIGS. 1 through 6 are plan views showing embodiments of the present invention. FIG. 1 shows a first embodiment of the present invention, and is a schematic plan view showing an embodiment in which diameters of small glass balls (ball objects) decreases toward inner reflection bands, and ratio of exposed area of small glass balls per unit area of each reflection band becomes smaller toward the center. FIG. 2 shows a second embodiment of the present invention, and is a schematic plan view showing an embodiment in which diameters of small glass balls arranged in each reflection band are same, and ratio of exposed area of small glass balls per unit area of each reflection band becomes smaller toward the center. FIG. 3 shows a third embodiment of the present invention, and is a schematic plan view showing an embodiment in which diameters of small glass balls are same and has no reflection bands, and ratio of exposed area of small glass balls per unit area of each reflection band steplessly becomes smaller toward the center. FIG. 4 shows a fourth embodiment of the present invention, and is a schematic plan view showing an embodiment in which prisms decrease their size toward the inner reflection bands, and ratio of exposed area of prisms per unit area of each reflection band becomes smaller toward the center. FIG. 5 is a plan view of a fifth embodiment of the present invention, which is constituted a mixture of prisms and small glass balls, prisms being arranged in the outer region, the small glass balls being arranged in the inner region. FIG. 6 shows a sixth embodiment of the present invention, and is a schematic plan view showing an embodiment in which the reflection band 2 is oval, diameters of small glass balls arranged in each reflection band are same, and ratio of exposed area of small glass balls per unit area of each reflection band becomes smaller toward the center. FIG. 7 is a sectional view taken along line A-A of FIG. 1, while FIG. 8 is a perspective view for illustrating a process for manufacturing the recursive reflector of FIG. 1.

In a first embodiment of the present invention, as shown in FIGS. 1 and 7, the recursive reflector is constituted by concentrically arranging reflection bands 2 with different reflectance on a base material 1.

The reflection bands 2 consist of a plurality of reflection bands 2a, 2b, 2c and 2d which are arranged such that reflectance is smaller toward the center, the reflection band 2d has the highest reflectance in a unit area, the reflection band 2a has the lowest reflectance, and the reflectance gradually decreases toward the inner region. As shown in FIG. 7, in the first embodiment, the reflectance per unit area is varied by arranging the small glass balls 3, which are transparent or translucent balls with different size such that their exposed per unit area decreases toward the center. If there is the same number of small glass balls 3 in a unit area, a small glass ball 3 with larger diameter can accept much amount of incident light, and thus provides much quantity of reflected light. In addition, since the incident light tends to spread as the distance increases, a small glass ball 3 with larger curvature receives much quantity of light, and thus provides much quantity of reflected light. While the number of small glass balls 3 with different size may be the same in a Unit area, the present invention is not limited to such, but the reflectance per unit area may be varied by changing the exposed area of small glass balls 3 per unit area as described above.

While the first embodiment varies the reflectance by changing the exposed area of small glass balls 3 with different shape per unit area, it is not limited to such arrangement. For example, a second embodiment is arranged to decrease the reflectance by reducing the number of small glass balls 3 per unit toward the center, thereby changing the exposed area of small glass balls 3 with the same shape per unit area.

In addition, while the transparent material of the first embodiment is small glass balls 3, the material is not limited to such, but may be prisms. The prism being used includes a regular triangle pyramid prism, and a cone prism with bottom cone angle of 90 degrees. The prism has a high accuracy and reflectance. Since the reflectance is increased by enlarging the size of prism, larger prisms may be arranged in the outer region for the exposes area of prism per unit area to decrease toward the center. For example, a fourth embodiment shown in FIG. 4 is arranged to vary the reflectance by changing the exposed area prisms 3e, 3f, 3g and 3h with different shape per unit area toward the center. The arrangement is not limited to the above, but the reflection may be decreased by changing the exposed area of prism with the same shape per unit area, thereby reducing the number of small glass balls 3 per unit area toward the center. Furthermore, the transparent material may be a combination of small glass balls and prisms. For example, as shown in FIG. 5, the reflectance may be varied by arranging the prisms 3g and 3h in the outer region and small glass balls 3a and 3b in the inner region so that the reflected light per unit area is decreased toward the center. The combination is not limited to the above, but any combination is included as long as the reflectance per unit area is decreased toward the center. It may be also possible to combine small glass balls, small balls of other material, prisms or the like.

While this embodiment uses small glass balls 3 as the transparent material, any material may be used as long as it is transparent and uniform, and transparent balls of, for example, plastics or ceramic may be acceptable. Glass particularly has an advantage that it is hard to deteriorate and has good stability.

In FIGS. 1 and 7, the small glass balls 3 consists of four types of small glass balls with different diameter of 3a, 3b, 3c and 3d from the center, small glass balls 3a being the smallest, the small glass balls 3d being the largest. The diameter of small glass ball 3 is preferably about several tens micron to about 1 mm when it is used for a light wave range finder, for example. However, the diameter is not limited to such range, but the range may be for smaller diameter if a short reflection distance is acceptable, while a range may be necessary for one covering larger diameter than above if a long reflection distance is required. In addition, the range may be changed depending on the type of beam being used. In addition, while the first embodiment stepwise arranges the reflection bands 2 in four bands of 2a, 2b, 2c and 2d, the number of bands is not limited to such, but they may be arranged in two bands of 2a and 2b or three bands of 2a, 2b and 2c for a simple arrangement, or otherwise it may be sufficient to provide five or more reflection bands when accurate brightness distribution is required. In addition, without stepwise providing the reflection bands 2 with different reflectance, for example, as shown in FIG. 3, the density of small glass balls 3 may be steplessly varied from dense to coarse toward the center.

The recursive reflector is arranged, as shown in FIG. 7, by arranging the small glass balls 3 on a reflection film 4 which is disposed on a thin adhesive paint plate 5, and providing an air layer 7 on the small glass balls 3 to cover the surface with a film-like protective layer 6. The reflection film 4 is a film like layer and secured on the adhesives paint plate 5. In addition, the protective layer 6 (not shown) is arranged to be secured on the base material 1 with support bases provided on the circumference of the base material 1. As described, it is possible to prevent contamination on the surface of the transparent material 3 by providing a sealing air layer 7 on the surface of reflector, and by providing a light transmitting protective layer 6 on the surface of air layer 7. In addition, contamination can be easily removed only by wiping the protective layer 6. The protective layer 6 is, for example, a cover made of transparent glass or resin, or the like. In addition, the area of air layer 6 may be light transmitting liquid.

In addition, the base material 1 maybe a bendable sheet, whereby the recursive reflector may be mounted on a tubular or curved object, thereby widening its application of use.

While this embodiment changes the exposed area of small glass balls 3 per unit area, thereby varying the reflectance, it is not limited to such, but may be as follows:

### (1) Adhesive paint

The reflectance is varied by changing ratio of the adhesive paint 5 in which the small glass balls 3 are mixed, as shown in FIG. 2. In this case, since the reflectance decreases as the ratio of small glass balls in the adhesive paint 5 per unit area is lowered while the size of small glass ball is maintained constant, the small glass balls are arranged such that the ratio of small glass balls is lowered toward the center. When the paint is mixed with the small glass balls 3 and applied on the base material 1, the small glass balls 3 with smaller diameter have sometimes smaller exposed area since they are easily embedded in the adhesive paint 5. Thus, it may be acceptable to embed and arrange lower half of the small glass ball 3 in the adhesive paint 5 after the paint is applied.

### (2) Pigment

The reflectance is varied by changing color of pigment in the adhesive paint 5. Since the reflectance is in the order of silver or white, yellow, orange, red, blue and green from good to poor, it may be acceptable to change color of pigment. Since the color can be visually confirmed at a short distance in particular, it is effective to change the pigment. However, since reflection by the adhesive paint 5 is irregular reflection, it provides little impact in the case of long distance.

### (3) Shape of reflection band

While this embodiment concentrically arranges reflection bands with different width but with same width, it is not limited to such, but may arrange to be wider or narrower toward the center. In addition, the reflection bands may not be in a concentric circle, but it is acceptable as long as the reflectance in the outer region is higher. For example, they may be arranged in a concentric oval or polygon. For example, if the incident light has an oval-shape (for example, semiconductor laser), ovals may be concentrically arranged such that the reflectance becomes smaller toward the center, as shown in FIG. 6. As described, since the shape may be changed for the shape of incident light, an appropriate shape may be employed for the type of laser being used (circle for gas laser, and oval for semiconductor laser), so that quantity difference of reflected light can be reduced between the center and the periphery. In addition, for a place where light is incident with inclination, the reflection bands may be arranged simply by changing the arrangement of reflection bands into a lateral or longitudinal linear or arc strip. In addition, the reflectance may be varied spirally, rather than concentrically. Furthermore, while this embodiment stepwise separates the reflection bands as shown in FIGS. 1 and 2, it is not limited to such, but may arrange steplessly the bands to have density from coarse to dense, as shown in FIG. 3, so that the reflectance continuously varies.

In addition, it is of course possible to obtain a recursive reflector in which the reflectance is intermittently varied by providing a slit between each reflection band or a zone in which no small glass ball is arranged, rather than arranging the reflection bands side by side to vary the reflectance. In addition, it is of course possible to provide a combination in which small balls and prisms of material different from the small glass ball are alternately arranged.

### (4) Material

The reflectance can be varied as a whole by changing material of the base material 1 to vinyl (ex. PVC), acrylic, polyester or the like depending on usage.

It is also possible to vary the reflectance by using such material such as liquid crystal the reflectance of which can be varied by applying voltage on the base material 1 or the reflection band 2.

Now, there is described a process for manufacturing the recursive reflector according to this embodiment with reference to FIG. 8.

As shown in the figure, the adhesive paint 8 is applied by rotating the base material 1, causing the adhesive paint 0 uniformly mixed with the small glass balls 3 to flow down from above. Since centrifugal force is generated by rotation of the base material 1, the paint is applied and arranged such that the small glass balls 3 are dense in the outer region. The coarseness of small glass balls 3 can be steplessly adjusted by varying amount of adhesive paint 8 flowing down per unit time. It can be also adjusted by varying the rotating speed of base material 1.

The manufacturing process is not limited to the above, but it may be acceptable that the adhesive paint 5 is first applied on the base material 1, and then the transparent material 3 such as balls or prisms is embedded and arranged in the paint. In the case of ball, it is arranged that the upper half is exposed. In the case of prism, for example, as shown in FIG. 4, it may be manufactured by injecting resin into a previously prepared mold, and forming the resin into a prism after the resin is solidified.

The present invention is not limited to the above embodiments, but may include variations which can be devised by those skilled in the art within a scope of the appended claims.

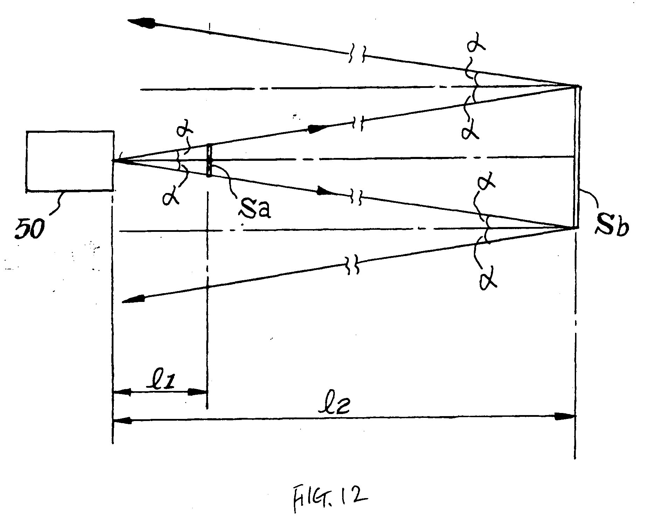

FIG. 11 shows a case where the recursive reflector of the present invention is applied to a light wave range finder. The light wave range finder collimates a modulated laser beam into collimated light, directs it toward a recursive reflector (target), receives reflected light from it, and compares phases of the incident light and the reflected light to measure a distance from the phase difference between them. In this case, it is preferable in view of measurement accuracy that the incident light has the same level as the reflected light. The recursive reflector of the present invention can reduce level difference in quantity of reflected light due to difference in distance.

As shown in FIG. 11, the basic structure of light wave range finder is to intensity modulate light from a light emitting device with a specific frequency, transmits it to a target, and compares the phase of received light signal reflected from the target with that of the light transmitted to the target, thereby measuring a distance.

That is, light from a laser diode LD, a visible light emitting semiconductor, in a light transmitting optical system 31 is turned into collimated light 22 by a transmitting objective lens 21, directed to a target or an object distance to which is measured, while reflected light 23 is focused onto a light receiving device APD by a light receiving objective lens 24 in a light receiving optical system 32, and converted into an electric signal 25. The diameter and focal distance of the objective lens 21 can be made small by reducing a light emitting diameter of the laser diode LD. The diameter of objective lens 24 is made as large as possible than that of the objective lens 21.

The light transmitting optical system 31 is placed in parallel to the light receiving optical system 32, and the light transmitting optical system 31 is disposed behind the light receiving optical system 32, thereby preventing radio waves of electrical circuits in both optical systems from being mixed. A reflecting plate 26 also serving as a shutter is rotatably mounted by a supporting point 27 in the negative side of a optical path of the collimated light 22 of the light transmitting optical system 31 to extract internal light. The reflecting plate 26 is resiliently urged outward by a spring 28, and rotated into the optical path by a plunger 29. The reflecting plate 26 may be a diffusion plate. There is provided a stopper 40 for stopping the rotation of the reflecting plate 26 at an angle of 45° with respect to the optical path of the collimated light 22. There are provided an ND filter 41 and an iris 42 opposite to the reflecting plate 26 for adjusting the internal light to a reference quantity of light.

There is provided a half mirror 33 with transmittance of 90% in the optical path 16 of the reflected light 23 opposite to the ND filter 41 and the iris 42 for guiding the internal light. In addition, there is provided in the optical path 16 of the reflected light 23 a filter 34 rotated by a motor 15 for adjusting and reducing quantity of received light. The filter 34 for adjusting and reducing the quantity of received light is, for example, an ND filter the density of which continuously varies.

In such light wave range finder, the recursive reflector 12 of the present invention is used as a reflecting plate on the target.

Conventionally, while there arises trouble in measurement accuracy since the level of reflected light tends to decrease as the distance between the light wave range finger and the recursive reflector increases, the level difference becomes as large as about 1/10000 in a range of about 1 m - about several hundreds meters, when the recursive reflector 12 of the present invention is used, the level difference decreases to as much as 1/100 through 1/10, so that the level adjustment can be very easily attained by the filter 34. In addition, if quantity difference of light is small, the quantity level of light can be adjusted without using the filter 34.

Specifically, while the laser beam is used in a form of collimated light, when it is projected toward a target at a long distance away, it spreads outward with a minute angle α, as shown in FIG. 12. (In the figure, the angle α is exaggerated than actual angle for ease of recognition.) While the light wave range finder can 50 typically measure distance from one meter to several hundred meters, since a recursive reflector with uniform reflectance regardless of position is conventionally used, there is difference in quantity of light of about 1/10000 between the reflected light from a target at about 1 m and that from a target at about 200 m. On the other hand, the recursive reflector 12 of the present invention is arranged such that, when light is incident on the Sb plane at a distance 12, the reflectance per unit area in the outer region is high although the laser beam spreads, so that the reflected light from the outer region can have much quantity of light. Thus, the level difference in quantity of light can be suppressed to about 1/100 through 1/10 between a short distance and a long distance, so that the quantity level of light can be very easily adjusted.

Since the laser beam spreads by about 20 cm at a distance of about 200 m, the recursive reflector 12 is sufficient to have a reflecting region of at least 20 cm. Of course, it is possible to reduce the size depending on distance for use. Thus, difference in quantity of light is about 1/100 through 1/10 which is about 1/100 through 1/1000 of the conventional one, so that density of the filter can be easily adjusted.

As described, since the recursive reflector of the present invention is formed to have reflectance decreasing toward the center of incident light when it is used in the light receiving optical system 32, the difference in quantity of light due to difference of distance can be compensated to a small level, so that a light wave range finder can be significantly improved for its accuracy and manufactured at a low cost.

As described above, according to the present invention, since reflectance is varied to decrease toward the center, it is possible to provide a reflector which does not provide too much reflection at a short distance and can be surely confirmed visually at a long distance when it is used for a road-sign, notice plate, advertisement, safety sign, life-saving device or the like.

In addition, while incident light has much quantity of light at the center, since reflectance of the recursive reflector of the present invention varies to decrease toward the center, there is an advantage that the quantity of reflected light does not too intense even at a short distance, and light is reflected without loss of quantity of reflected light even at a long distance where light spreads because the reflectance is higher in the outer region.

Therefore, when the recursive reflector of the present invention is used for a Light wave range finder, since it is formed for reflectance to decrease toward the center, and thus, level difference in quantity of reflected light due to difference of distance can be compensated to a significantly low level, there is an advantage that quantity of light can be easily adjusted for a neutral density filter or the like.

In addition, the recursive reflector of the present invention also has an advantage that it can be easily manufactured at a low cost.

## Claims

1. A recursive reflector comprising a reflector provided on a base material, said reflector being arranged to have reflectance decreasing toward its center.

2. The recursive reflector as set forth in claim 1, wherein said reflector consisting of a plurality of reflection bands with different reflectance which are concentrically arranged.

3. The recursive reflector as set forth in claim 1 or 2, wherein said reflector consists of a plurality of transparent or translucent recursive materials with different reflectance, ratio of exposed area of said transparent or translucent material being arranged to be dense to coarse toward the center of said reflector.

4. The recursive reflector as set forth in any one of claims 1 through 3, wherein said reflector is formed by arranging a plurality of transparent or translucent uniform balls with different reflectance.

5. The recursive reflector as set forth claim 4, wherein said ball is a transparent or translucent uniform glass.

6. The recursive reflector as set forth claim 4, wherein said ball is a transparent or translucent uniform plastics.

7. The recursive reflector as set forth claim 4, wherein said ball is a transparent or translucent uniform ceramics.

8. The recursive reflector as set forth in any one of claims 3 through 7, wherein the reflectance is arranged to be decreasing toward the center by providing adhesive paint on said base material, and changing a ratio of said transparent or translucent material exposed from said adhesive paint.

9. The recursive reflector as set forth in any one of claims 4 through 7, wherein diameter of said ball is about several tens microns or more but about 1 mm or less.

10. The recursive reflector as set forth in any one of claims 3 through 9, wherein the ratio of exposed area of said transparent or translucent material per unit area is made lower toward the center.

11. The recursive reflector as set forth in any one of claims 1 through 3, wherein said reflector consists of a plurality of prisms.

12. The recursive reflector as set forth in any one of claims 1 through 3, wherein said reflector is a mixture of prisms and transparent or translucent balls.

13. The recursive reflector as set forth in claim 12, wherein the prisms are arranged in the outer region of said reflector, while the transparent or translucent balls are arranged in the inner region, thereby the reflection decreasing toward the center.

14. A recursive reflector comprising a base material (1) such as resin including vinyl, acrylic, and polyester, metal or wood, and a plurality of reflection bands (2) concentrically arranged on said base material (1) such that the reflectance decreases toward the center, said reflection band (2) being transparent or translucent uniform balls (3) such as glass or plastics which are arranged to be exposed from adhesive paint (5) such that the area of said ball exposed per unit area is smaller toward the center, thereby varying the reflectance.

15. The recursive reflector as set forth in any one of claims 1 through 14, wherein a sealed air layer (7) is provided on the surface of said reflector, a light transmitting protective layer (6) being provided on the surface of said air layer.

16. The recursive reflector as set forth in any one of claims 1 through 15, wherein said base material consists of a bendable sheet.

17. A process for manufacturing a recursive reflector comprising the steps of rotating the base material (1), causing the adhesive paint (8) mixed with the transparent or translucent uniform balls (3) to flow down from a point above the center of rotation of the base material (1), and concentrically applying the paint with a centrifugal force due to the rotation.
